Europäisches Patentamt

European Patent Office

Office européen des brevets

(19)

(11) Veröffentlichungsnummer : **0 104 575**
**B1**

# (12) EUROPÄISCHE PATENTSCHRIFT

(45) Veröffentlichungstag der Patentschrift :
27.07.88

(21) Anmeldenummer : 83109266.3

(22) Anmeldetag : 19.09.83

(51) Int. Cl.⁴ : **G 01 L 1/14, G 01 L 5/22**

(54) Druckwandleranordnung, insbesondere für Industrieroboter.

(30) Priorität : 29.09.82 DE 3236098

(43) Veröffentlichungstag der Anmeldung :
04.04.84 Patentblatt 84/14

(45) Bekanntmachung des Hinweises auf die Patenterteilung : 27.07.88 Patentblatt 88/30

(84) Benannte Vertragsstaaten :
CH DE FR GB IT LI

(56) Entgegenhaltungen :
AT-B- 355 836
DE-A- 2 529 475
GB-A- 1 562 766

(73) Patentinhaber : Siemens Aktiengesellschaft Berlin
und München
Wittelsbacherplatz 2
D-8000 München 2 (DE)

(72) Erfinder : Diepers, Heinrich, Dr.
Veit-Stoss-Strasse 44
D-8522 Höchstadt (DE)
Erfinder : Schewe, Herbert, Dr.
Haydn-Strasse 58
D-8522 Herzogenaurach (DE)

**Beschreibung**

Die Erfindung bezieht sich auf eine Druckwandleranordnung, insbesondere für Industrieroboter, mit einer Matrix von Wandlerelementen, die in den Kreuzungspunkten von Zeilenleitern und senkrecht dazu verlaufenden Spaltenleitern gebildet sind.

Eine bekannte Ausführungsform einer Druckwandleranordnung für Alarm- oder Sicherungsanlagen enthält eine Matrix von Wandlerelementen, die in den Kreuzungspunkten von Zeilen- und Spaltenleitern gebildet sind. Von zwei Folien aus Polyvinylidenfluorid (PVDF), die durch eine elektrisch isolierende Zwischenlage getrennt sind, ist eine mit den Zeilen- und die andere mit den Spaltenleitern versehen. Diese Sandwichanordnung ist auf ihren beiden Flachseiten jeweils durch eine elektrisch leitende Schicht abgedeckt und kann außerdem an den beiden Flachseiten jeweils noch mit einer Lochplatte versehen sein. Die Signalbildung erfolgt piezoelektrisch durch Druckeinwirkung und Verbiegen der Piezofolien (PCT-Offenlegungsschrift WO 81/02223).

Es sind ferner elektrische Taster auf kapazitiver Basis bekannt, bei denen das Zusammenpressen eines Dielektrikums eine sprunghafte Kapazitätsänderung bewirkt, die mit Hilfe geeigneter Schaltungen in Impulse umgesetzt und einer Elektronik zugeführt werden. Solche Taster ohne mechanische Kontakte haben eine hohe Lebensdauer (Elektronikschau, Heft 9, 1980, Seite 27).

Aufgabe der Erfindung ist es, eine taktile Flächensensor-Matrix, insbesondere für Industrieroboter, anzugeben. Solche Flächensensoren können in den Greifer des Industrieroboters eingesetzt werden und ermöglichen die Erkennung und Lagebestimmung von Werkstücken.

Es sind taktile Sensoren bekannt, die leitfähige Elastomere, leitfähige Kunststoffe, kraftabhängige schaltbare Dioden oder piezoresistive Elemente sowie pneumatische Schalter enthalten können. Es ist bei diesen Sensoren jedoch schwierig, die Sensorelemente kostengünstig im erforderlichen Maße zu verkleinern, um eine Matrix mit kleinerem Rasterabstand und damit höherer Ortsauflösung zu verwirklichen.

Die Erfindung beruht nun auf der Erkenntnis, daß die hohe Dielektrizitätskonstante von Piezokeramik, vorzugsweise Blei-Zirkonat-Titanat (PZT), ausreicht zur Herstellung einer kapazitiven Sensormatrix mit sehr kleinem Rasterabstand. Die Erfindung besteht deshalb in den Gestaltungsmerkmalen nach dem Kennzeichen des Anspruchs 1. Mit einem Rastermaß der Zeilen- und Spaltenleiter von wenigen 100 µm und dem Luftpolster über dem Dielektrikum erhält man einen empfindlichen Flächensensor, der in einfacher Weise hergestellt werden kann.

Die nicht vom Dielektrikum bedeckten Zeilen- oder Spaltenleiter können in einer besonderen Ausführungsform der Druckwandleranordnung aus einem sogenannten Interkonnektor bestehen.

Zum Herstellen der Druckwandleranordnung wird die dünne Grundplatte metallisiert und mit dem Dielektrikum versehen. Aus dieser Doppelschicht entstehen die Zeilen- oder Spaltenleiter durch Einritzen von parallelen Nuten bis hinab in die Grundplatte. Diese Nuten werden anschließend mit elektrisch isolierendem Material, beispielsweise einem selbsthärtenden Kunststoff, gefüllt. Anschließend wird die freie Oberfläche geebnet, beispielsweise durch Abschleifen, und mit Abstandhaltern versehen. Diese Abstandhalter können vorzugsweise durch Photolithographie aus einer photoempfindlichen Schicht hergestellt werden. Auf diesen Abstandhaltern werden dann die Zeilen- bzw. Spaltenleiter angeordnet, die beispielsweise an einer als Abdeckung dienenden Kunststoffolie befestigt sein können.

Zur weiteren Erläuterung der Erfindung wird auf die Zeichnung Bezug genommen, deren Figuren 1 und 2 zur Erläuterung der Verfahrensschritte zum Herstellen der Druckwandleranordnung nach der Erfindung dienen und in deren Figur 3 ein Ausführungsbeispiel einer Druckwandleranordnung nach der Erfindung als perspektivische Ansicht schematisch veranschaulicht ist. In Figur 4 ist eine besondere Ausführungsform der Zeilen- oder Spaltenleiter dargestellt.

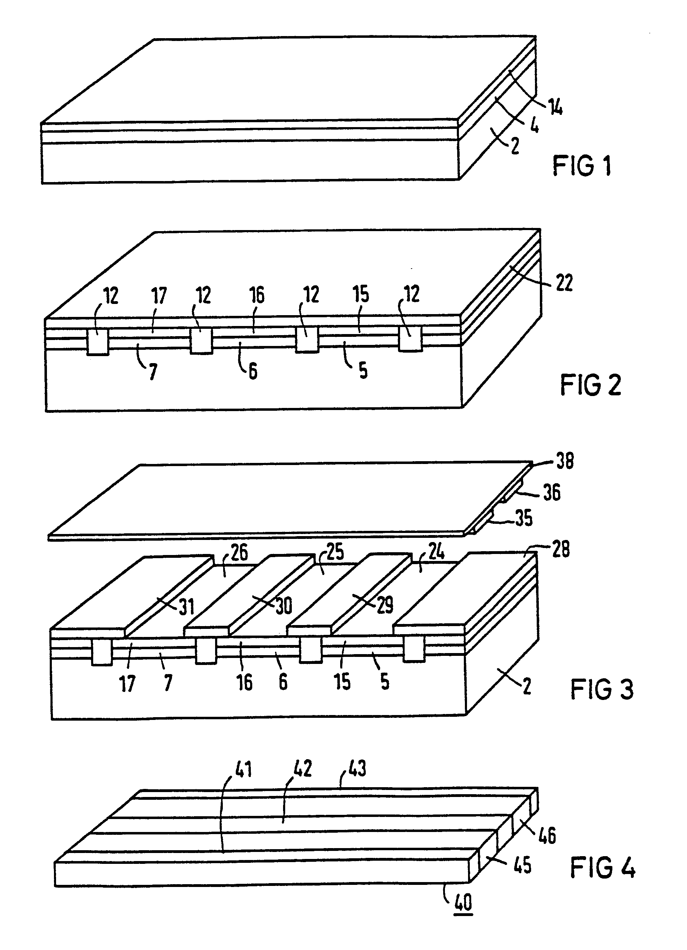

Nach Figur 1 ist eine Grundplatte 2, deren Dicke 1 000 µm nicht wesentlich überschreitet und beispielsweise 300 µm betragen kann und die beispielsweise aus Keramik, Aluminiumoxid, Blei-Zirkonat-Titanat oder Kunststoff sowie einem anderen geeigneten elektrisch nicht leitenden Trägermaterial bestehen kann. Sie wird mit einer als Elektrodenmaterial geeigneten Metallisierung 4 versehen, die beispielsweise aus Indium-Zinn (InSn), Gold oder Kupfer bestehen kann und deren Dicke 100 µm nicht wesentlich überschreitet und insbesondere höchstens 10 µm betragen kann. Diese Metallisierung 4 wird mit einer als Dielektrikum 14 dienenden Auflage mit hoher Dielektrizitätskonstante versehen, die beispielsweise aus Piezokeramik oder auch aus Kunststoff mit eingebetteten PZT-Keramikteilchen, vorzugsweise aus Blei-Zirkonat-Titanat (PZT), besteht, deren relative Dielektrizitätskonstante etwa 4 000 beträgt. Ihre Dicke wird im allgemeinen 100 µm nicht wesentlich überschreiten und vorzugsweise etwa 10 bis 100 µm betragen. Im Falle der Kunststoffolie wird eine Dicke von etwa 5 bis 100 µm bevorzugt.

Diese Doppelschicht aus der Metallisierung 4 und dem Dielektrikum 14 wird nach Figur 2 durch parallele, bis in die Grundplatte 2 hineinreichende Nuten 12 in streifenförmige Bereiche aufgeteilt, deren metallische Teile jeweils eine Spaltenelektrode bilden, die in der Figur mit 5 bis 7 bezeichnet sind und die jeweils durch ein in gleicher Weise gestaltetes Dielektrikum 15 bis 17 abgedeckt sind. Die Nuten 12 werden anschließend mit einem elektrisch isolierenden Material, vorzugsweise einem selbsthärtenden Kunststoff (Araldit), gefüllt, und die freie Oberfläche wird anschließend geebnet, beispielsweise geschliffen. Die freie Oberfläche wird mit einer photoempfindlichen Schicht 22 versehen, deren Dicke wenigstens 10 μm beträgt und im allgemeinen 100 μm nicht wesentlich überschreitet.

Aus dieser photoempfindlichen Schicht 22 werden nach Figur 3 in bekannter Weise photolithographisch Hohlräume herausgearbeitet, die in der Figur mit 24, 25 und 26 bezeichnet sind. Die von der Schicht 22 verbliebenen stegförmigen Teile bilden Abstandhalter 28 bis 31 für Zeilenelektroden 35 und 36, die vorzugsweise rechtwinklig zu den Spaltenleitern 5, 6 und 7 über den Abstandhaltern 28 bis 31 angeordnet werden und die beispielsweise an einer Abdeckung 38 befestigt sein können. Die Zeilenelektroden 35 und 36 bestehen im allgemeinen aus Metall, beispielsweise Gold oder Kupfer, und können zweckmäßig auf die untere Flachseite der Abdeckung 38, die aus einer Kunststoffolie (Kapton) bestehen kann, aufgedampft oder aufgesputtert sein.

Bei Druckeinwirkung auf die Abdeckung 38 ändert sich der Abstand der Elektroden im Kreuzungspunkt der betreffenden Zeilenelektrode 35 oder 36 und einer der Spaltenelektroden 5 bis 7 bis zur Berührung der Zeilenelektroden 35 oder 36 mit dem Dielektrikum. Diese Abstandsänderung und Berührung bewirkt eine entsprechende Kapazitätserhöhung, die beispielsweise bei Verwendung von Blei-Zirkonat-Titanat (PZT) mit einer relativen Dielektrizitätskonstante von etwa 4 000 als Dielektrikum 15 bis 17 wenigstens eine Größenordnung beträgt gegenüber den Serienkapazitäten aus dem Dielektrikum Luft plus Piezokeramik im Falle des Ruhezustandes bei fehlender Krafteinwirkung. Diese Kapazitätsänderung wird durch Auslese der Spalten- und Zeilenelektroden in ein ortsabhängiges elektrisches Signal umgesetzt.

Entsprechend der Ausführungsform nach Figur 4 können Zeilenelektroden 35 und 36 auch aus einem sogenannten Interkonnektor 40 bestehen, bei dem in einem Elastomer parallel zueinander angeordnete elektrisch isolierende Bereiche 41, 42 und 43 eingelagert sind, die jeweils einen als Zeilenelektroden 45 bzw. 46 dienenden streifenförmigen, elektrisch leitenden Bereich seitlich begrenzen. Dieser Interkonnektor 40 wird dann auf die Abstandhalter 28 bis 31 aufgelegt und kann zweckmäßig noch mit einer Abdeckung versehen sein.

### Patentansprüche

1. Druckwandleranordnung, insbesondere für Industrieroboter, mit einer Matrix von Wandlerelementen, die in den Kreuzungspunkten von Zeilenleitern (35, 36 ; 45, 46) und senkrecht dazu verlaufenden Spaltenleitern (5 bis 7) gebildet sind, dadurch gekennzeichnet, daß auf einem flachen Grundkörper (2) streifenförmige, elektrisch gegeneinander isolierte Spaltenleiter (5 bis 7) angeordnet sind, die jeweils mit einer in gleicher Weise gestalteten Piezokeramik als Dielektrikum (15 bis 17) abgedeckt sind, die durch Hohlräume (24 bis 26) von den streifenförmigen Zeilenelektroden (35, 36) getrennt sind (Figur 3).

2. Druckwandleranordnung nach Anspruch 1, dadurch gekennzeichnet, daß Blei-Zirkonat-Titanat (PZT) als Dielektrikum vorgesehen ist.

3. Druckwandleranordnung nach Anspruch 1 oder 2, dadurch gekennzeichnet, daß die Zeilenelektroden (45, 46) oder die Spaltenelektroden in einen Interkonnektor (40) eingebettet sind.

4. Druckwandleranordnung nach einem der Ansprüche 1 bis 3, dadurch gekennzeichnet, daß als Dielektrikum (40) eine Kunststoffolie mit eingebetteten Piezokeramikteilchen vorgesehen ist.

5. Verfahren zum Herstellen einer Druckwandleranordnung nach einem der Ansprüche 1 bis 4, dadurch gekennzeichnet, daß eine dünne Grundplatte (2) mit einer Doppelschicht aus einer Metallisierung (4) und einer Piezokeramik als Dielektrikum (14) versehen wird und daß diese Doppelschicht durch Nuten (12) in streifenförmige Bereiche aufgetrennt wird, deren Metallstreifen Spaltenleiter (5 bis 7) bilden, und daß die Nuten (12) mit einer Füllung aus elektrisch isolierendem Material versehen werden, und daß die freien Oberflächen der streifenförmigen Dielektrika (15 bis 17) derart mit Abstandhaltern (28 bis 31) für Zeilenelektroden (35, 36) versehen werden, daß in den Kreuzungspunkten der Zeilenelektroden (35, 36) mit den Spaltenelektroden (5 bis 7) Hohlräume (24 bis 26) entstehen.

6. Verfahren nach Anspruch 5, dadurch gekennzeichnet, daß die Abstandhalter (28 bis 31) photolithographisch aus einer photoempfindlichen Schicht (22) herausgearbeitet werden.

### Claims

1. Pressure transducer arrangement, more particularly for industrial robots, having a matrix of transducer elements which are formed at the crossover points of row conductors (35, 36 ; 45, 46) and column conductors (5 to 7) running perpendicular thereto, characterised in that arranged on a flat base body (2) there are strip-like column conductors (5 to 7) which are insulated electrically from each other and which are covered, in each case, with a similarly shaped piezoceramic as a dielectric (15 to 17), separated by means of cavities (24 to 26) from the strip-like row electrodes (35, 36) (Figure 3).

2. Pressure transducer arrangement according to claim 1, characterised in that lead zirconate titanate (PZT) is provided as a dielectric.

3. Pressure transducer arrangement according to claim 1 or 2, characterised in that the row electrodes (45, 46) or the column electrodes are embedded in an interconnector (40).

4. Pressure transducer arrangement according to one of the claims 1 to 3, characterised in that a plastics foil with embedded piezoceramic particles is provided as a dielectric (40).

5. Method for producing a pressure transducer arrangement according to one of the claims 1 to 4, characterised in that a thin base plate (2) is provided with a double layer consisting of a metallic coating (4) and a piezoceramic as a dielectric (14) and in that this double layer is separated by slots (12) into strip-like areas, the metal strips of which form column conductors (5 to 7), and in that the slots (12) are provided with a filling of electrically insulating material and in that the free surfaces of the strip-like dielectrics (15 to 17) are provided in such a way with spacing pieces (28 to 31) for row electrodes (35, 36) that cavities (24 to 26) develop at the crossover points of the row electrodes (35, 36) with the column electrodes (5 to 7).

6. Method according to claim 5, characterised in that the spacing pieces (28 to 31) are formed out of a photo-sensitive layer (22) photolithographically.

**Revendications**

1. Transducteur de pression, notamment pour des robots industriels, comportant une matrice d'éléments transducteurs, qui sont formés aux points de croisement entre des conducteurs de lignes (35, 36 ; 45, 46) et des conducteurs de colonnes (5 à 7) s'étendant perpendiculairement aux précédents, caractérisé en ce que sur un corps de base (2) plat, sont ménagés des conducteurs de colonnes (5 à 7) en forme de bandes et électriquement isolés les uns des autres, qui sont chacun recouverts comme diélectrique (15 à 17) par une céramique piézoélectrique, conformée de manière identique, et qui sont séparés des électrodes de lignes (35, 36) par des cavités (24 à 26) (figure 3).

2. Transducteur de pression selon la revendication 1, caractérisé en ce que du zirconate-titanate de plomb (PZT) est prévu comme diélectrique.

3. Transducteur de pression selon la revendication 1 ou 2, caractérisé en ce que les électrodes de lignes (45, 46) ou les électrodes de colonnes sont logées dans un interconnecteur (40).

4. Transducteur de pression selon l'une des revendications 1 à 3, caractérisé en ce qu'une feuille en matière plastique, dans laquelle sont noyées des particules de céramique piézoélectrique, est prévue comme diélectrique (40).

5. Procédé de fabrication d'un transducteur de pression selon l'une des revendications 1 à 4, caractérisé en ce qu'une plaque de base (2) est pourvue d'une double couche de métallisation (4) et d'une céramique piézoélectrique comme diélectrique (14) et que cette double couche est divisée, par des gorges (12), en des domaines en forme de bandes, dont les bandes métalliques constituent des conducteurs de colonnes (5 à 7), et que les gorges (12) sont pourvues d'un remplissage en un matériau électriquement isolant, et que les surfaces libres des diélectriques (15 à 17) en forme de bandes sont pourvues d'entretoises (28 à 31) destinées à des électrodes de lignes (35, 36), de manière que des cavités (24 à 26) apparaissent aux points de croisement entre électrodes de lignes (35, 36) et électrodes de colonnes (5 à 7).

6. Procédé selon la revendication 5, caractérisé en ce que les entretoises (28 à 31) sont façonnées de manière photolithographique dans une couche photosensible (22).

FIG 1

FIG 2

FIG 3

FIG 4